# FASCICULE DE BREVET EUROPEEN

(11) **EP 3 681 740 B1**
(45) Date de publication et mention de la délivrance du brevet: **16.03.2022**
(21) Numéro de dépôt: 18772849.8
(22) Date de dépôt: 27.08.2018
(51) Int. Cl.: B60G 21/055, B60G 21/10

(54) **DISPOSITIF ANTI-DÉVERS À MOYENS D'ACTION PILOTÉS PAR UN CIRCUIT DE CONTRÔLE HYDRAULIQUE, POUR UN TRAIN DE VÉHICULE AUTOMOBILE**
ROLLSCHUTZVORRICHTUNG FÜR KRAFTFAHRZEUGRADSATZ MIT BETÄTIGUNGSMITTELN, DIE DURCH EINEN HYDRAULISCHEN STEUERKREIS GESTEUERT WERDEN
MOTOR VEHICLE WHEELSET ANTI-ROLL DEVICE WITH ACTUATING MEANS OPERATED BY A HYDRAULIC CONTROL CIRCUIT

(30) Priorité: 12.09.2017 FR 1758458
(43) Date de publication de la demande: 22.07.2020
(73) Titulaire: PSA Automobiles SA, 78300 Poissy (FR); BWI France S.A.S.U., 95700 Roissy-en-France (FR)
(72) Inventeur: CAVAREC, Alan, 78350 LES LOGES EN JOSAS (FR); GERMAIN, Philippe, 94120 Fontenay-Sous-Bois (FR); PERRÉE, Bruno, 75017 Paris (FR)
(86) Numéro de dépôt international: PCT/FR2018/052106
(87) Numéro de publication internationale: WO 2019/053351

(56) Documents cités:
- FR-A1- 2 786 133
- JP-A- H0 263 914
- JP-A- S6 364 813
- JP-U- H0 234 302
- JP-U- S6 340 214
- US-A- 5 788 031
- US-A1- 2006 290 079

## Description

L'invention concerne les dispositifs anti-dévers (ou anti-roulis ou encore de stabilisation) qui équipent certains véhicules automobiles.

Comme le sait l'homme de l'art, un dispositif anti-dévers (ou anti-roulis ou encore de stabilisation) est un équipement comprenant une barre dont les extrémités opposées sont couplées respectivement à des roues droite et gauche d'un train d'un véhicule (automobile) via deux biellettes.

Un tel dispositif est principalement sollicité lorsque le véhicule roule dans un virage ou sur une voie de circulation qui est dégradée de façon dissymétrique par rapport à son axe longitudinal. Dans un virage la barre est sollicitée en torsion et en flexion pour maintenir autant que possible l'assiette du véhicule, et donc plus sa raideur est élevée plus elle est utile. En présence d'une dégradation la barre transmet partiellement l'irrégularité de la voie de circulation subie par l'une des roues d'un train à l'autre roue de ce même train par un phénomène de « renvoi de roulis », et donc plus sa raideur est élevée plus elle induit une dégradation du confort.

Comme cela est décrit dans le document brevet US 8,167,319, on peut faire varier la dégradation de confort induite par le dispositif anti-dévers en fonction des situations de vie rencontrées en adjoignant à chaque biellette un vérin hydraulique couplé à un circuit fluidique comportant une électrovanne, des clapets anti-retour et un réservoir de fluide pour la compensation des variations de volume induites par les mouvements du piston du vérin hydraulique. Chaque circuit fluidique est ici relativement peu complexe, mais la présence de deux circuits fluidiques augmente l'encombrement global et le prix. De plus, lorsque le véhicule comprend deux trains de roues, on se retrouve avec quatre électrovannes. Or, plus le nombre d'électrovannes est élevé, plus le risque de panne ou de dysfonctionnement est élevé et plus la consommation électrique est élevée. En outre, plus le nombre d'électrovannes est élevé, plus on doit prévoir de faisceaux électriques pour alimenter en courant et en commandes ces électrovannes, et donc plus on augmente les coûts de fabrication et d'installation et la complexification de l'installation dans le véhicule et des algorithmes de génération des commandes des électrovannes. On connait encore du document JPS6364813A un autre dispositif anti-devers. Le document FR 2 786 133 A1 divulgue un dispositif anti-devers dont le verin est très proche de celui de l'invention.

Par ailleurs, le circuit hydraulique ne permet pas de s'assurer que le vérin hydraulique est en position neutre (dans laquelle il ne fournit pas d'effort) quand il est placé dans un état boqué (interdisant une variation de longueur).

L'invention a donc notamment pour but d'améliorer la situation.

Elle propose notamment à cet effet un dispositif anti-dévers, destiné à équiper un train de véhicule automobile ayant des roues droite et gauche, et comprenant une barre propre à être couplée à ces roues droite et gauche via deux biellettes.

Ce dispositif anti-dévers se caractérise par le fait qu'il comprend
- des moyens d'action faisant partie de la barre et comportant un carter définissant une chambre subdivisée en des première et seconde parties de volumes variables par un piston solidaire fixement d'une tige, et comprenant des première et seconde entrées-sorties communiquant respectivement avec les première et seconde parties et une entrée-sortie intermédiaire communiquant avec la première partie ou la seconde partie selon la position du piston, et prenant un état débrayé ou un état bloqué dans n'importe quelle position du piston selon des états d'accessibilité en cours respectifs des première et seconde entrées-sorties et de l'entrée-sortie intermédiaire, et
- un circuit de contrôle hydraulique et contrôlant les états d'accessibilité en fonction de commandes reçues,
et en ce que la barre comprend un premier bras dont une première extrémité est solidarisée fixement au carter, un second bras dont une première extrémité est solidarisée à la tige du piston, la tige pouvant translater par rapport au carter, les secondes extrémités des premier et second bras étant reliées chacune à une biellette.

Grâce à l'invention, on peut désormais placer les moyens d'action dans leur état bloqué quelle que soit la position en cours du piston. La biellette ou la barre comprenant les moyens d'action reviendra toujours en position neutre sous l'effet des mouvements de roues ou de caisse et restera en position neutre par la suite. Cela permet d'obtenir le comportement bloqué sans attendre que la biellette ou la barre se positionne au milieu. Cela évite aussi de mettre en place un algorithme de contrôle pour bloquer la biellette ou la barre en position neutre, avec les capteurs associés et les risques liés.

Le dispositif anti-dévers selon l'invention peut comporter d'autres caractéristiques qui peuvent être prises séparément ou en combinaison, et notamment :
- le circuit de contrôle peut comprendre, d'une première part, des premier et second moyens anti-retour couplés chacun à au moins l'une des première et seconde entrées-sorties et entrée-sortie intermédiaire, d'une deuxième part, au moins une électrovanne couplée à au moins l'une des première et seconde entrées-sorties et entrée-sortie intermédiaire, et éventuellement à l'un au moins des premier et second moyens anti-retour, et placée soit dans un premier état imposant l'état débrayé, soit dans un second état imposant l'état bloqué, et, d'une troisième part, un réservoir de fluide compensant au moins des variations de volume induites par des déplacements du piston ;
   ➢ dans un premier mode de réalisation, le circuit de contrôle peut coupler, d'une première part, la première entrée-sortie au réservoir de fluide via le premier moyen anti-retour, permettant uniquement un passage de fluide du réservoir de fluide vers la première entrée-sortie, et via une première électrovanne montée en parallèle du premier moyen anti-retour et pouvant prendre soit un premier état ouvert associé à l'état débrayé, soit un second état fermé associé à l'état bloqué, d'une deuxième part, la seconde entrée-sortie au réservoir de fluide via le second moyen anti-retour, permettant uniquement un passage de fluide du réservoir de fluide vers la seconde entrée-sortie, et via une seconde électrovanne montée en parallèle du second moyen anti-retour et pouvant prendre soit un premier état ouvert associé à l'état débrayé, soit un second état fermé associé à l'état bloqué, et, d'une troisième part, l'entrée-sortie intermédiaire au réservoir de fluide. Dans ce cas, le circuit de contrôle place les première et seconde électrovannes soit dans le premier état ouvert pour placer les moyens d'action dans l'état débrayé, soit dans le second état fermé pour placer les moyens d'action dans l'état bloqué ;
   ➢ dans un deuxième mode de réalisation, le circuit de contrôle peut coupler, d'une première part, la première entrée-sortie au réservoir de fluide via une première électrovanne comportant le premier moyen anti-retour, permettant uniquement un passage de fluide du réservoir de fluide vers la première entrée-sortie, et pouvant prendre soit un premier état ouvert associé à l'état débrayé, soit un second état défini par le premier moyen anti-retour et associé à l'état bloqué, d'une deuxième part, la seconde entrée-sortie au réservoir de fluide via une seconde électrovanne comportant le second moyen anti-retour, permettant uniquement un passage de fluide du réservoir de fluide vers la seconde entrée-sortie, et pouvant prendre soit un premier état ouvert associé à l'état débrayé, soit un second état défini par le second moyen anti-retour et associé à l'état bloqué, et, d'une troisième part, l'entrée-sortie intermédiaire au réservoir de fluide. Dans ce cas, le circuit de contrôle place les première et seconde électrovannes soit dans le premier état ouvert pour placer les moyens d'action dans l'état débrayé, soit dans le second état pour placer les moyens d'action dans l'état bloqué ;
   ➢ dans un troisième mode de réalisation, le circuit de contrôle peut coupler, d'une part, les première et seconde entrées-sorties au réservoir de fluide via une électrovanne à au moins trois voies et comportant les premier et second moyens anti-retour, permettant uniquement un passage de fluide du réservoir de fluide vers respectivement les première et seconde entrées-sorties, et pouvant prendre soit un premier état ouvert associé à l'état débrayé, soit un second état défini par les premier et second moyens anti-retour et associé à l'état bloqué, et, d'autre part, l'entrée-sortie intermédiaire au réservoir de fluide. Dans ce cas, le circuit de contrôle place les première et seconde électrovannes soit dans le premier état ouvert pour placer les moyens d'action dans l'état débrayé, soit dans le second état pour placer les moyens d'action dans l'état bloqué ;
   ➢ dans un quatrième mode de réalisation, le circuit de contrôle peut coupler les première et seconde entrées-sorties et l'entrée-sortie intermédiaire au réservoir de fluide via une électrovanne à six voies et, d'une part, comportant les premier et second moyens anti-retour, permettant uniquement un passage de fluide du réservoir de fluide vers respectivement les première et seconde entrées-sorties, et, d'autre part, pouvant prendre soit un premier état ouvert associé à l'état débrayé et dans lequel le fluide circule entre les première et seconde parties et le réservoir de fluide mais ne circule pas entre l'entrée-sortie intermédiaire et le réservoir de fluide, soit un second état associé à l'état bloqué et dans lequel le fluide circule du réservoir de fluide vers les première et seconde parties via respectivement les premier et second moyens anti-retour et circule entre l'entrée-sortie intermédiaire et le réservoir de fluide. Dans ce cas, le circuit de contrôle place l'électrovanne soit dans le premier état ouvert pour placer les moyens d'action dans l'état débrayé, soit dans le second état pour placer les moyens d'action dans l'état bloqué ;
- le piston peut comprendre un bord périphérique ayant une épaisseur strictement supérieure à une dimension correspondante de l'entrée-sortie intermédiaire. Par exemple, le bord périphérique du piston peut loger partiellement un joint d'étanchéité ayant une épaisseur strictement supérieure à la dimension correspondante de l'entrée-sortie intermédiaire ;
   ➢ le carter et le piston peuvent définir un vérin à palette ou un vérin à vis.

Dans le cas d'un vérin à vis celui-ci est de préférence à vis à billes ;
- il peut comprendre des moyens de contrôle propres à générer chaque commande à destination de chaque électrovanne.

L'invention propose également un véhicule automobile comprenant au moins un train comportant des roues droite et gauche couplées via un dispositif anti-dévers du type de celui présenté ci-avant.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue en perspective, un premier exemple de réalisation d'un dispositif anti-dévers selon l'invention, avant son couplage à un train d'un véhicule automobile,
- la figure 2 illustre schématiquement et fonctionnellement, dans une vue en perspective, un second exemple de réalisation d'un dispositif anti-dévers selon l'invention, avant son couplage à un train d'un véhicule automobile,
- la figure 3 illustre schématiquement et fonctionnellement, dans une vue en coupe, un premier exemple de réalisation de moyens d'action et de circuit de contrôle d'un dispositif anti-dévers selon l'invention,
- la figure 4 illustre schématiquement et fonctionnellement, dans une vue en coupe, un deuxième exemple de réalisation de moyens d'action et de circuit de contrôle d'un dispositif anti-dévers selon l'invention,
- la figure 5 illustre schématiquement et fonctionnellement, dans une vue en coupe, un troisième exemple de réalisation de moyens d'action et de circuit de contrôle d'un dispositif anti-dévers selon l'invention,
- la figure 6 illustre schématiquement et fonctionnellement, dans une vue en coupe, un quatrième exemple de réalisation de moyens d'action et de circuit de contrôle d'un dispositif anti-dévers selon l'invention, et
- la figure 7 illustre schématiquement et fonctionnellement, dans une vue en coupe, un cinquième exemple de réalisation de moyens d'action et de circuit de contrôle d'un dispositif anti-dévers selon l'invention.

L'invention a notamment pour but de proposer un dispositif anti-dévers (ou anti-roulis ou encore de stabilisation) DA destiné à équiper un train d'un véhicule automobile.

Dans ce qui suit, on considère, à titre d'exemple non limitatif, que le véhicule automobile est une voiture. Mais l'invention n'est pas limitée à ce type de véhicule automobile. Elle concerne en effet tout type de véhicule automobile comprenant au moins un train de roues devant être équipé d'un dispositif anti-dévers.

Par ailleurs, on considère dans ce qui suit, à titre d'exemple non limitatif, que le train est destiné à être installé dans une partie avant d'un véhicule automobile. Mais l'invention concerne également les trains arrière de véhicule automobile.

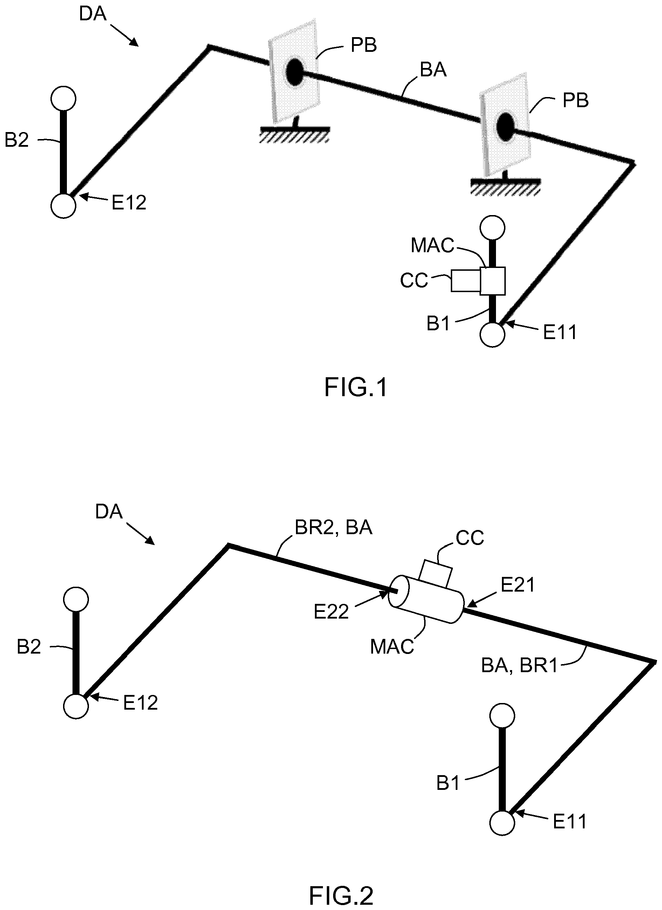

Sur les figures 1 et 2 sont illustrés schématiquement deux exemples de réalisation d'un dispositif anti-dévers DA selon l'invention, destiné à équiper un train de roues d'un véhicule automobile (ici une voiture). Comme illustré, un dispositif anti-dévers DA, selon l'invention, comprend au moins une barre anti-dévers BA, des première B1 et seconde B2 biellettes, des moyens d'action MAC et un circuit de contrôle CC hydraulique.

La barre (anti-dévers) BA est propre à être couplée à des roues droite et gauche d'un train d'un véhicule automobile, via les première B1 et seconde B2 biellettes. Elle est par ailleurs couplée à la caisse du véhicule, par exemple via des paliers PB, comme illustré non limitativement sur la figure 1.

On notera que dans les deux exemples illustrés non limitativement sur les figures 1 et 2, la barre (anti-dévers) BA présente une forme générale en U. Mais elle pourrait présenter d'autres formes.

Dans le premier exemple illustré non limitativement sur la figure 1, la barre (anti-dévers) BA est monobloc. Elle comprend donc deux extrémités E1j (j = 1 ou 2) opposées et propres à être couplées respectivement aux roues droite et gauche d'un train via les première B1 et seconde B2 biellettes. Le couplage biellette Bj / extrémité E1j peut se faire par une liaison rotule ou pivot, par exemple.

Dans le second exemple illustré non limitativement sur la figure 2, la barre (anti-dévers) BA comprend des premier BR1 et second BR2 bras qui sont indépendants l'un de l'autre, et comprennent chacun des première E1j et seconde E2j extrémités. Chaque première extrémité E1j est propre à être couplée à l'une des roues droite et gauche d'un train via l'une des biellettes Bj. Le couplage biellette Bj / première extrémité E1j peut se faire par une liaison rotule ou pivot, par exemple. Les secondes extrémités E2j sont couplées aux moyens d'action MAC.

Dans les deux exemples illustrés non limitativement sur les figures 1 et 2, la valeur 1 de l'indice j désigne le côté droit, tandis que la valeur 2 de l'indice j désigne le côté gauche. Mais l'inverse est possible.

Les moyens d'action MAC font partie soit de l'une des biellettes Bj, comme illustré sur la figure 1, soit de la barre BA, comme illustré sur la figure 2. Dans tous les cas, ces moyens d'action MAC comportent un carter CR et un piston PI.

Le carter CR définit une chambre CH qui est subdivisée en des première P1 et seconde P2 parties de volumes variables par un piston PI solidaire fixement d'une tige T. De plus, le carter CR comprend une première entrée-sortie ES1 qui communique avec la première partie P1 de la chambre CH, une seconde entrée-sortie ES2 qui communique avec la seconde partie P2 de la chambre CH, et une entrée-sortie intermédiaire ESI qui communique avec la première partie P1 ou la seconde partie P2 de la chambre CH selon la position du piston PI.

Le carter CR et le piston PI (avec sa tige T) définissent une sorte de vérin à trois entrées-sorties ES1, ES2 et ESI.

Le piston PI comprend un bord périphérique BP ayant une épaisseur e strictement supérieure à une dimension correspondante de l'entrée-sortie intermédiaire ESI, afin que du fluide ne puisse pas entrer ou sortir par l'entrée-sortie intermédiaire ESI de la chambre CH lorsque le piston PI est placé devant cette entrée-sortie intermédiaire ESI.

Il est préférable que le bord périphérique BP du piston PI loge partiellement un joint d'étanchéité JE ayant une épaisseur strictement supérieure à la dimension correspondante de l'entrée-sortie intermédiaire ESI. Cela permet que le joint JE obstrue complètement l'entrée-sortie intermédiaire ESI lorsque le piston PI est placé devant cette entrée-sortie intermédiaire ESI (et donc à mi-course).

Dans le premier exemple illustré non limitativement sur la figure 1, le carter CR est solidarisé fixement à une partie inférieure de la première biellette B1, et l'extrémité de la tige T qui est opposée au piston PI est solidarisée fixement à une partie supérieure de la première biellette B1. En revanche, dans le second exemple illustré non limitativement sur la figure 2, le carter CR est solidarisé fixement à la seconde extrémité E21 du premier bras BR1, et l'extrémité de la tige T qui est opposée au piston PI est solidarisée fixement à la seconde extrémité E22 du second bras BR2. Un agencement inversé est également possible.

On notera que le carter CR peut, par exemple, présenter une forme cylindrique circulaire.

On notera également que dans le premier exemple illustré non limitativement sur la figure 1, le carter CR et le piston PI peuvent définir un vérin classique du fait qu'ils permettent une variation, par translation du piston PI avec sa tige T, de la longueur (ou hauteur) de la (première) biellette B1 lorsque cette dernière (B1) réagit aux sollicitations du train. En d'autres termes, l'une des biellettes Bj (ici B1) constitue une biellette de longueur variable et pilotée par une commande, et l'autre biellette Bj' (ici B2) présente une longueur fixe et donc est tout à fait classique.

Dans le second exemple illustré non limitativement sur la figure 2, le carter CR et le piston PI peuvent définir un vérin à palette ou un vérin à vis, en particulier à vis à billes, par exemple, du fait qu'ils permettent une variation, par une combinaison d'une rotation et d'une translation du piston PI avec sa tige T, de la rotation relative du premier bras BR1 par rapport au second bras BR2. En d'autres termes, l'une des deux parties Pj (par exemple P1) constitue une « chambre stator » tandis que l'autre partie (par exemple P2) constitue une «chambre rotor». Les deux biellettes Bj présentent donc, ici, une longueur fixe. Elles (Bj) sont donc classiques du fait qu'elles sont dépourvues des moyens d'action MAC.

Ces moyens d'action MAC peuvent prendre soit un état débrayé, soit un état bloqué dans n'importe quelle position du piston PI, selon des états d'accessibilité en cours respectifs des première ES1 et seconde ES2 entrées-sorties et de l'entrée-sortie intermédiaire ESI.

On entend ici par « état d'accessibilité » la possibilité ou l'impossibilité qu'à un fluide d'entrer par une entrée-sortie pour pénétrer dans une partie de la chambre du carter ou de sortir par une entrée-sortie pour circuler dans le circuit de contrôle CC.

Le circuit de contrôle CC est hydraulique (et donc est parcouru par un fluide) et contrôle les états d'accessibilité des entrées-sorties ES1, ES2 et ESI en fonction de commandes reçues.

Le fluide peut, par exemple, être une huile. Ainsi, il pourra par exemple s'agir d'une huile hydraulique ou d'une huile d'amortisseur.

Chaque commande reçue peut, par exemple, être déterminée en fonction d'irrégularités détectées sous le véhicule par un capteur de paramètre physique (tel qu'un accéléromètre) et/ou d'une fin de virage détectée devant le véhicule par des moyens d'observation ou par un système de guidage par satellites et/ou de la vitesse en cours du véhicule. Par ailleurs, chaque commande reçue provient de moyens de contrôle MCT qui peuvent éventuellement faire partie du dispositif anti-dévers DA. Par exemple, ils peuvent faire partie d'un calculateur du véhicule et être chargés de déterminer en temps réel et de façon dynamique, chaque commande.

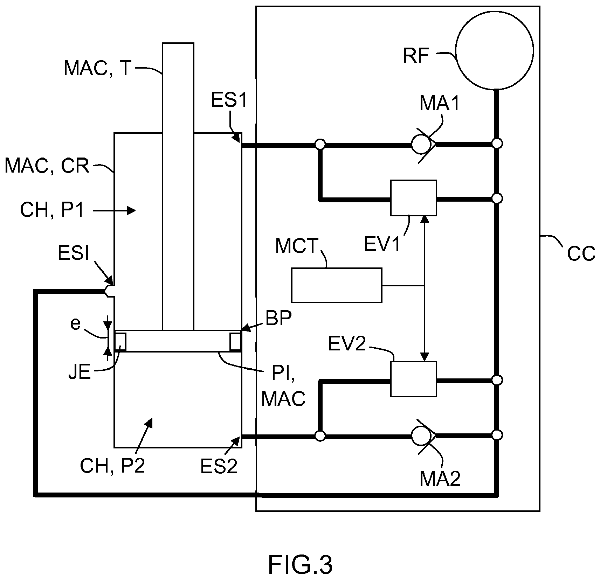

Par exemple, le circuit de contrôle CC peut comprendre des premier MA1 et second MA2 moyens anti-retour, au moins une électrovanne EVk et un réservoir de fluide RF, comme illustré non limitativement sur les figures 3 à 7.

Les premier MA1 et second MA2 moyens anti-retour sont couplés chacun à au moins l'une des première ES1 et seconde ES2 entrées-sorties et entrée-sortie intermédiaire ESI.

Par exemple, ces premier MA1 et second MA2 moyens anti-retour peuvent être agencés sous la forme de clapets anti-retour. Mais cela n'est pas obligatoire. En effet, ce qui est important c'est qu'ils permettent chacun une circulation de fluide selon un unique sens (ici vers l'une au moins des entrées-sorties ES1 et ES2), mais pas selon le sens inverse (à savoir ici depuis l'une au moins des entrées-sorties ES1 et ES2).

La/chaque électrovanne EVk est couplée à au moins l'une des première ES1 et seconde ES2 entrées-sorties et entrée-sortie intermédiaire ESI, et éventuellement à l'un au moins des premier MA1 et second MA2 moyens anti-retour, et peut être placée soit dans un premier état imposant l'état débrayé des moyens d'action MAC, soit dans un second état imposant l'état bloqué des moyens d'action MAC.

Dans l'état débrayé les première P1 et seconde P2 parties de la chambre CH peuvent être reliées entre elles et au réservoir de fluide RF par le circuit de contrôle CC, et par conséquent la longueur (ou hauteur) de la première biellette B1 peut varier librement.

Dans l'état bloqué la/chaque électrovanne EVk n'autorise une évacuation de fluide hors de la chambre CH que par l'entrée-sortie intermédiaire ESI, et par conséquent la longueur (ou hauteur) de la première biellette B1 ne peut pas varier librement. C'est un fonctionnement similaire à celui d'un cliquet hydraulique et qui permet d'avoir une position à l'équilibre à mi-course lorsque le piston PI est au niveau de l'entrée-sortie intermédiaire ESI.

L'état (premier ou second) dans lequel est placée une électrovanne EVk est piloté (ou défini) par la commande que reçoit cette électrovanne EVk.

Le réservoir de fluide RF est chargé de compenser au moins des variations de volume induites par des déplacements du piston PI, ainsi qu'éventuellement des variations liées à la température.

L'exemple de circuit de contrôle CC décrit ci-avant peut être agencé de différentes façons. Cinq de ces façons sont décrites ci-après en référence respectivement aux figures 3 à 7.

Dans la première façon, illustrée sur la figure 3, le circuit de contrôle CC comprend des première EV1 (k = 1) et seconde EV2 (k = 2) électrovannes à deux voies, les premier MA1 et second MA2 moyens anti-retour, le réservoir de fluide RF et des conduits dans lesquels peut circuler le fluide.

Ce circuit de contrôle CC couple :
- la première entrée-sortie ES1 au réservoir de fluide RF via le premier moyen anti-retour MA1, qui permet uniquement un passage de fluide du réservoir de fluide RF vers la première entrée-sortie ES1, et via la première électrovanne EV1, qui est montée en parallèle du premier moyen anti-retour MA1 et peut prendre soit un premier état ouvert associé à l'état débrayé, soit un second état fermé associé à l'état bloqué,
- la seconde entrée-sortie ES2 au réservoir de fluide RF via le second moyen anti-retour MA2, qui permet uniquement un passage de fluide du réservoir de fluide RF vers la seconde entrée-sortie ES2, et via la seconde électrovanne EV2, qui est montée en parallèle du second moyen anti-retour MA2 et peut prendre soit un premier état ouvert associé à l'état débrayé, soit un second état fermé associé à l'état bloqué, et
- l'entrée-sortie intermédiaire ESI au réservoir de fluide RF.

De plus, le circuit de contrôle CC place les première EV1 et seconde EV2 électrovannes soit dans le premier état ouvert lorsque les moyens d'action MAC doivent être placés dans l'état débrayé, soit dans le second état fermé lorsque les moyens d'action MAC doivent être placés dans l'état bloqué. Par conséquent, dans l'état débrayé, le fluide circule entre les première P1 et seconde P2 parties de la chambre CH, ainsi qu'entre les première P1 et seconde P2 parties et le réservoir de fluide RF. Dans l'état bloqué, le fluide est interdit de circuler non seulement entre les première P1 et seconde P2 parties de la chambre CH, mais également entre les première P1 et seconde P2 parties et le réservoir de fluide RF.

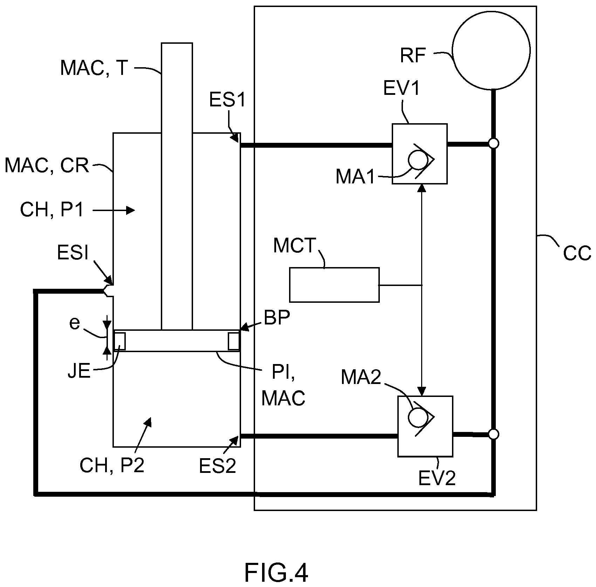

Dans la deuxième façon, illustrée sur la figure 4, le circuit de contrôle CC comprend des première EV1 (k = 1) et seconde EV2 (k = 2) électrovannes à deux voies et comprenant respectivement les premier MA1 et second MA2 moyens anti-retour, le réservoir de fluide RF et des conduits dans lesquels peut circuler le fluide.

Ce circuit de contrôle CC couple :
- la première entrée-sortie ES1 au réservoir de fluide RF via la première électrovanne EV1, qui comprend le premier moyen anti-retour MA1 qui permet uniquement un passage de fluide du réservoir de fluide RF vers la première entrée-sortie ES1, et qui peut prendre soit un premier état ouvert associé à l'état débrayé, soit un second état défini par le premier moyen anti-retour MA1 et associé à l'état bloqué,
- la seconde entrée-sortie ES2 au réservoir de fluide RF via la seconde électrovanne EV2, qui comprend le second moyen anti-retour MA2 qui permet uniquement un passage de fluide du réservoir de fluide RF vers la seconde entrée-sortie ES2, et qui peut prendre soit un premier état ouvert associé à l'état débrayé, soit un second état défini par le second moyen anti-retour MA2 et associé à l'état bloqué, et
- l'entrée-sortie intermédiaire ESI au réservoir de fluide RF.

De plus, le circuit de contrôle CC place les première EV1 et seconde EV2 électrovannes soit dans le premier état ouvert lorsque les moyens d'action MAC doivent être placés dans l'état débrayé, soit dans le second état lorsque les moyens d'action MAC doivent être placés dans l'état bloqué. Par conséquent, dans l'état débrayé, le fluide circule entre les première P1 et seconde P2 parties de la chambre CH, ainsi qu'entre les première P1 et seconde P2 parties et le réservoir de fluide RF. Dans l'état bloqué, le fluide est interdit de circuler non seulement entre les première P1 et seconde P2 parties de la chambre CH, mais également entre les première P1 et seconde P2 parties et le réservoir de fluide RF.

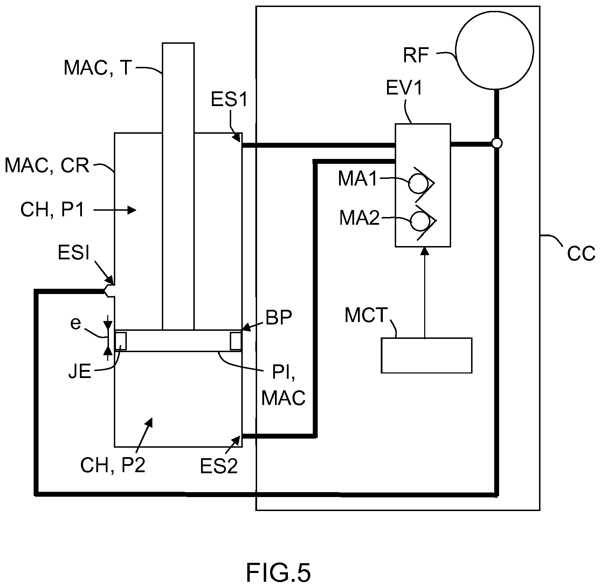

Dans la troisième façon, illustrée sur la figure 5, le circuit de contrôle CC comprend une électrovanne EV1 (k = 1) à trois voies et comprenant les premier MA1 et second MA2 moyens anti-retour, le réservoir de fluide RF et des conduits dans lesquels peut circuler le fluide.

Ce circuit de contrôle CC couple :
- les première ES1 et seconde ES2 entrées-sorties au réservoir de fluide RF via l'électrovanne EV1, qui comprend les premier MA1 et second MA2 moyens anti-retour qui permettent uniquement un passage de fluide du réservoir de fluide RF vers respectivement les première ES1 et seconde ES2 entrées-sorties, et qui peut prendre soit un premier état ouvert associé à l'état débrayé, soit un second état défini par les premier MA1 et second MA2 moyens anti-retour et associé à l'état bloqué, et
- l'entrée-sortie intermédiaire ESI au réservoir de fluide RF.

De plus, le circuit de contrôle CC place l'électrovanne EV1 soit dans le premier état ouvert lorsque les moyens d'action MAC doivent être placés dans l'état débrayé, soit dans le second état lorsque les moyens d'action MAC doivent être placés dans l'état bloqué. Par conséquent, dans l'état débrayé, le fluide circule entre les première P1 et seconde P2 parties de la chambre CH, ainsi qu'entre les première P1 et seconde P2 parties et le réservoir de fluide RF. Dans l'état bloqué, le fluide est interdit de circuler non seulement entre les première P1 et seconde P2 parties de la chambre CH, mais également entre les première P1 et seconde P2 parties et le réservoir de fluide RF.

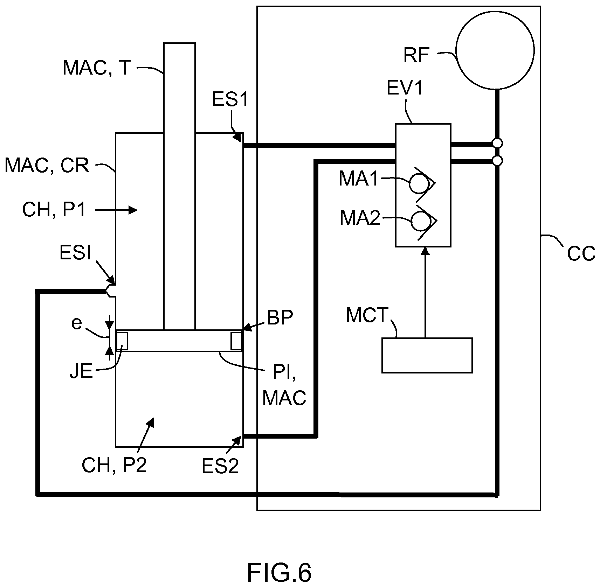

Dans la quatrième façon, illustrée sur la figure 6, le circuit de contrôle CC est une variante de celui illustré sur la figure 5. Il comprend une électrovanne EV1 (k = 1) à quatre voies (au lieu de trois (d'où la formulation « au moins trois voies »)) et comprenant les premier MA1 et second MA2 moyens anti-retour, le réservoir de fluide RF et des conduits dans lesquels peut circuler le fluide. Le fonctionnement de ce circuit de contrôle CC est identique à ce celui décrit ci-avant en référence à la figure 5, car seul l'agencement interne de l'électrovanne EV1 est différent.

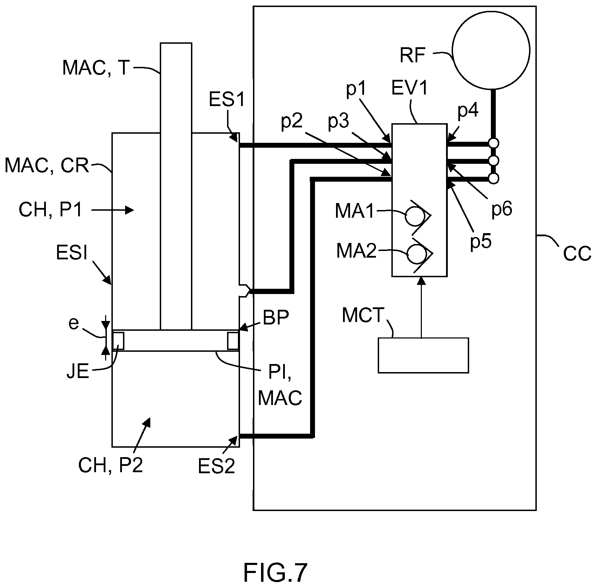

Dans la cinquième façon, illustrée sur la figure 7, le circuit de contrôle CC comprend une électrovanne EV1 (k = 1) à six voies (ou ports) p1 à p6 et comprenant les premier MA1 et second MA2 moyens anti-retour, le réservoir de fluide RF et des conduits dans lesquels peut circuler le fluide.

Ce circuit de contrôle CC couple les première ES1 et seconde ES2 entrées-sorties et l'entrée-sortie intermédiaire ESI au réservoir de fluide RF via l'électrovanne EV1 qui comprend les premier MA1 et second MA2 moyens anti-retour, qui permettent uniquement un passage de fluide du réservoir de fluide RF vers respectivement les première ES1 et seconde ES2 entrées-sorties. Le port p1 est couplé à la première entrée-sortie ES1 et donc à la première partie P1 de la chambre CH. Le port p2 est couplé à la seconde entrée-sortie ES2 et donc à la seconde partie P2 de la chambre CH. Le port p3 est couplé à l'entrée-sortie intermédiaire ESI. Les autres ports p4 à p6 sont couplés au réservoir de fluide RF.

Dans ce cas, l'électrovanne EV1 peut prendre soit un premier état ouvert associé à l'état débrayé et dans lequel le fluide circule entre les première P1 et seconde P2 parties et le réservoir de fluide RF mais ne circule pas entre l'entrée-sortie intermédiaire ESI et le réservoir de fluide RF, soit un second état associé à l'état bloqué et dans lequel le fluide circule du réservoir de fluide RF vers les première P1 et seconde P2 parties de la chambre CH via respectivement les premier MA1 et second MA2 moyens anti-retour et circule entre l'entrée-sortie intermédiaire ESI et le réservoir de fluide RF.

De plus, le circuit de contrôle CC place l'électrovanne EV1 soit dans le premier état ouvert lorsque les moyens d'action MAC doivent être placés dans l'état débrayé, soit dans le second état lorsque les moyens d'action MAC doivent être placés dans l'état bloqué. Par conséquent, dans l'état débrayé, le fluide circule entre les ports p1 et p4 et entre les ports p2 et p5, et donc entre les première P1 et seconde P2 parties de la chambre CH et le réservoir de fluide RF, mais il ne peut pas circuler entre les ports p3 et p6 afin d'interdire sa circulation entre l'entrée-sortie intermédiaire ESI et le réservoir de fluide RF.

Dans l'état bloqué, le fluide circule du port p4 vers le port p1 via le premier moyen anti-retour MA1, du port p5 vers le port p2 via le second moyen anti-retour MA2, et librement (dans les deux sens) entre les ports p3 et p6 et donc l'entrée-sortie intermédiaire ESI est directement couplée au réservoir de fluide RF.

Dans chacun des exemples d'agencement décrits ci-avant, les moyens d'action MAC peuvent être placés dans l'état bloqué quelle que soit la position du piston PI, ce qui est particulièrement avantageux. Mais, si ce placement dans l'état bloqué à lieu au moment où le piston PI n'obstrue pas l'entrée-sortie intermédiaire ESI, le piston PI va rejoindre automatiquement une position d'équilibre à mi-course dans laquelle il obstrue l'entrée-sortie intermédiaire ESI. C'est ce que l'on appelle un auto-centrage.

On notera également que le réservoir de fluide RF et/ou les premier MA1 et second MA2 moyens anti-retour et/ou chaque électrovanne EVk et/ou les conduits peu(ven)t être externe(s) au carter CR définissant la chambre CH, comme illustré sur les figures 3 à 7, ou bien peu(ven)t être logés dans un éventuel autre carter dans lequel est également logé le carter CR définissant la chambre CH.

On notera également que lorsque le véhicule automobile comprend deux trains, chacun d'entre eux peut être équipé d'un dispositif anti-dévers DA selon l'invention.

L'invention offre plusieurs avantages, parmi lesquels :
- une possibilité de placer les moyens d'action dans leur état boqué quelle que soit la position en cours du piston,
- une simplification de l'installation du dispositif anti-dévers et de l'algorithme de génération de commande du fait de l'utilisation d'une seule électrovanne (ou de deux électrovannes fonctionnant en même temps et de façon identique avec la même commande) par train de roues et donc d'un seul faisceau électrique d'alimentation et de contrôle,
- une diminution du nombre de capteurs nécessaires et de la complexité de l'algorithme contrôlant l'état bloqué,
- une diminution du risque de panne ou de dysfonctionnement lorsqu'une seule électrovanne est utilisée par train de roues.

## Revendications

1. Dispositif anti-dévers (DA) pour un train d'un véhicule automobile, ledit dispositif (DA) comprenant une barre (BA) propre à être couplée à des roues droite et gauche dudit train via deux biellettes (Bj), **caractérisé en ce qu'**il comprend i) des moyens d'action (MAC) faisant partie de ladite barre (BA) et comportant un carter (CR) définissant une chambre (CH) subdivisée en des première (P1) et seconde (P2) parties de volumes variables par un piston (PI) solidaire fixement d'une tige (T), et comprenant des première (ES1) et seconde (ES2) entrées-sorties communiquant respectivement avec lesdites première (P1) et seconde (P2) parties et une entrée-sortie intermédiaire (ESI) communiquant avec ladite première partie (P1) ou ladite seconde partie (P2) selon la position dudit piston (PI), et prenant un état débrayé ou un état bloqué dans n'importe quelle position dudit piston (PI) selon des états d'accessibilité en cours respectifs desdites première (ES1) et seconde (ES2) entrées-sorties et de ladite entrée-sortie intermédiaire (ESI), et ii) un circuit de contrôle (CC) hydraulique et contrôlant lesdits états d'accessibilité en fonction de commandes reçues et **en ce que** la barre (BA) comprend un premier bras dont une première extrémité est solidarisée fixement au carter (CR), un second bras dont une première extrémité est solidarisée à la tige (T) du piston (PI), la tige (T) pouvant translater par rapport au carter (CR), les secondes extrémités des premier et second bras étant reliées chacune à une biellette.

2. Dispositif selon la revendication 1, **caractérisé en ce que** ledit circuit de contrôle (CC) comprend i) des premier (MA1) et second (MA2) moyens anti-retour couplés chacun à au moins l'une desdites première (ES1) et seconde (ES2) entrées-sorties et entrée-sortie intermédiaire (ESI), ii) au moins une électrovanne (EVk) couplée à au moins l'une desdites première (ES1) et seconde (ES2) entrées-sorties et entrée-sortie intermédiaire (ESI), et éventuellement à l'un au moins des premier (MA1) et second (MA2) moyens anti-retour, et placée soit dans un premier état imposant ledit état débrayé, soit dans un second état imposant ledit état bloqué, et iii) un réservoir de fluide (RF) compensant au moins des variations de volume induites par des déplacements dudit piston (PI).

3. Dispositif selon la revendication 2, **caractérisé en ce que** ledit circuit de contrôle (CC), d'une part, couple i) ladite première entrée-sortie (ES1) audit réservoir de fluide (RF) via ledit premier moyen anti-retour (MA1), permettant uniquement un passage de fluide dudit réservoir de fluide (RF) vers ladite première entrée-sortie (ES1), et via une première électrovanne (EV1) montée en parallèle dudit premier moyen anti-retour (MA1) et pouvant prendre soit un premier état ouvert associé audit état débrayé, soit un second état fermé associé audit état bloqué, ii) ladite seconde entrée-sortie (ES2) audit réservoir de fluide (RF) via ledit second moyen anti-retour (MA2), permettant uniquement un passage de fluide dudit réservoir de fluide (RF) vers ladite seconde entrée-sortie (ES2), et via une seconde électrovanne (EV2) montée en parallèle dudit second moyen anti-retour (MA2) et pouvant prendre soit un premier état ouvert associé audit état débrayé, soit un second état fermé associé audit état bloqué, et iii) ladite entrée-sortie intermédiaire (ESI) audit réservoir de fluide (RF), et, d'autre part, place lesdites première (EV1) et seconde (EV2) électrovannes soit dans ledit premier état ouvert pour placer lesdits moyens d'action (MAC) dans ledit état débrayé, soit dans ledit second état fermé pour placer lesdits moyens d'action (MAC) dans ledit état bloqué.

4. Dispositif selon la revendication 2, **caractérisé en ce que** ledit circuit de contrôle (CC), d'une part, couple i) ladite première entrée-sortie (ES1) audit réservoir de fluide (RF) via une première électrovanne (EV1) comportant ledit premier moyen anti-retour (MA1), permettant uniquement un passage de fluide dudit réservoir de fluide (RF) vers ladite première entrée-sortie (ES1), et pouvant prendre soit un premier état ouvert associé audit état débrayé, soit un second état défini par ledit premier moyen anti-retour (MA1) et associé audit état bloqué, ii) ladite seconde entrée-sortie (ES2) audit réservoir de fluide (RF) via une seconde électrovanne (EV2) comportant ledit second moyen anti-retour (MA2), permettant uniquement un passage de fluide dudit réservoir de fluide (RF) vers ladite seconde entrée-sortie (ES2), et pouvant prendre soit un premier état ouvert associé audit état débrayé, soit un second état défini par ledit second moyen anti-retour (MA2) et associé audit état bloqué, et iii) ladite entrée-sortie intermédiaire (ESI) audit réservoir de fluide (RF), et, d'autre part, place lesdites première (EV1) et seconde (EV2) électrovannes soit dans ledit premier état ouvert pour placer lesdits moyens d'action (MAC) dans ledit état débrayé, soit dans ledit second état pour placer lesdits moyens d'action (MAC) dans ledit état bloqué.

5. Dispositif selon la revendication 2, **caractérisé en ce que** ledit circuit de contrôle (CC), d'une part, couple i) lesdites première (ES1) et seconde (ES2) entrées-sorties audit réservoir de fluide (RF) via une électrovanne (EV1) à au moins trois voies et comportant lesdits premier (MA1) et second (MA2) moyens anti-retour, permettant uniquement un passage de fluide dudit réservoir de fluide (RF) vers respectivement lesdites première (ES1) et seconde (ES2) entrées-sorties, et pouvant prendre soit un premier état ouvert associé audit état débrayé, soit un second état défini par lesdits premier (MA1) et second (MA2) moyens anti-retour et associé audit état bloqué, et ii) ladite entrée-sortie intermédiaire (ESI) audit réservoir de fluide (RF), et, d'autre part, place ladite électrovanne (EV1) soit dans ledit premier état ouvert pour placer lesdits moyens d'action (MAC) dans ledit état débrayé, soit dans ledit second état pour placer lesdits moyens d'action (MAC) dans ledit état bloqué.

6. Dispositif selon la revendication 2, **caractérisé en ce que** ledit circuit de contrôle (CC), d'une part, couple lesdites première (ES1) et seconde (ES2) entrées-sorties et ladite entrée-sortie intermédiaire (ESI) audit réservoir de fluide (RF) via une électrovanne (EV1) à six voies et i) comportant lesdits premier (MA1) et second (MA2) moyens anti-retour, permettant uniquement un passage de fluide dudit réservoir de fluide (RF) vers respectivement lesdites première (ES1) et seconde (ES2) entrées-sorties, et ii) pouvant prendre soit un premier état ouvert associé audit état débrayé et dans lequel ledit fluide circule entre lesdites première (P1) et seconde (P2) parties et ledit réservoir de fluide (RF) mais ne circule pas entre ladite entrée-sortie intermédiaire (ESI) et ledit réservoir de fluide (RF), soit un second état associé audit état bloqué et dans lequel ledit fluide circule dudit réservoir de fluide (RF) vers lesdites première (P1) et seconde (P2) parties via respectivement lesdits premier (MA1) et second (MA2) moyens anti-retour et circule entre ladite entrée-sortie intermédiaire (ESI) et ledit réservoir de fluide (RF), et, d'autre part, place ladite électrovanne (EV1) soit dans ledit premier état ouvert pour placer lesdits moyens d'action (MAC) dans ledit état débrayé, soit dans ledit second état pour placer lesdits moyens d'action (MAC) dans ledit état bloqué.

7. Dispositif selon l'une des revendications précédentes, **caractérisé en ce que** lesdits carter (CR) et piston (PI) définissent un vérin à palette ou un vérin à vis.

8. Dispositif selon la revendication 7, **caractérisé en ce que** le vérin à vis est un vérin à vis à billes.

9. Véhicule automobile comprenant au moins un train comportant des roues droite et gauche, **caractérisé en ce qu'**il comprend en outre au moins un dispositif anti-dévers (DA) selon l'une des revendications précédentes, et couplé auxdites roues droite et gauche de ce train.

## Patentansprüche

1. Anti-Roll-Vorrichtung (DA) für einen Zug eines Kraftfahrzeugs, wobei die Vorrichtung (DA) eine Stange (BA) umfasst, die über zwei Lenker (Bj) mit dem rechten und dem linken Rad des Zuges koppelbar ist, **dadurch gekennzeichnet** wobei es umfasst i) Betätigungsmittel (MAC), die einen Teil der Stange (BA) bilden und ein Gehäuse (CR) umfassen, das eine Kammer (CH) definiert, die in einen ersten (P1) und zweiten (P2) Teil mit variablem Volumen unterteilt ist durch einen Kolben (PI) fest an einer Stange (T) befestigt und umfassend erste (ES1) und zweite (ES2) Eingänge/Ausgänge, die jeweils mit dem ersten (P1) und zweiten (P2) Teil kommunizieren, und einen Eingang - Zwischenausgang (ESI), der mit. kommuniziert wobei der erste Teil (P1) oder der zweite Teil (P2) abhängig von der Position des Kolbens (PI) einen ausgerückten Zustand oder einen blockierten Zustand in jeder Position des Kolbens (PI) gemäß den jeweiligen aktuellen Zugänglichkeitszuständen des einnehmen erster (ES1) und zweiter (ES2) Ein-Ausgänge und des Zwischeneingangs-Ausgangs (ESI) und ii) einen hydraulischen Steuerkreis (CC) und Steuern der Zugänglichkeitszustände in Abhängigkeit von empfangenen Befehlen und dadurch, dass die Stange (BA) einen ersten Arm umfasst, dessen erstes Ende fest befestigt ist am Gehäuse (CR), einen zweiten Arm, dessen erstes Ende an der Stange (T) des Kolbens (PI) befestigt ist, wobei die Stange (T) relativ zum Gehäuse (CR) verschiebbar ist, der zweite Enden des ersten und zweiten Arms sind jeweils mit einem Glied verbunden.

2. Vorrichtung nach Anspruch 1, **dadurch gekennzeichnet, dass** die Steuerschaltung (CC) umfasst i) erste (MA1) und zweite (MA2) Rückschlagmittel, die jeweils mit mindestens einem der ersten (ES1) und zweiten (ES2) Zwischeneingänge verbunden sind Ausgänge und Eingang-Ausgang (ESI), ii) mindestens ein Magnetventil (EVk), das mit mindestens einem der ersten (ES1) und zweiten (ES2) Zwischen-Eingang-Ausgang und Eingang-Ausgang (ESI) gekoppelt ist), und möglicherweise zu mindestens einem der ersten (MA1) und zweiten (MA2) Rückschlagmittel, und entweder in einem ersten Zustand, der den ausgerückten Zustand erzwingt, oder in einem zweiten Zustand, der den blockierten Zustand erzwingt, und iii) einem Flüssigkeitsreservoir (RF) Kompensieren zumindest der Volumenänderungen, die durch Bewegungen des Kolbens (PI) hervorgerufen werden.

3. Vorrichtung nach Anspruch 2, **dadurch gekennzeichnet, dass** die Steuerschaltung (CC) einerseits i) den ersten Eingang/Ausgang (ES1) mit dem Flüssigkeitsbehälter (RF) über die ersten Rückschlagmittel (MA1) koppelt. Erlaubt nur einen Flüssigkeitsdurchgang von dem Flüssigkeitsbehälter (RF) zum ersten Einlass/Auslass (ES1) und über ein erstes Magnetventil (EV1), das parallel zu dem ersten Rückschlagmittel (MA1) montiert ist und in der Lage ist, entweder einen ersten offenen Zustand der dem ausgerückten Zustand zugeordnet ist, oder einen zweiten geschlossenen Zustand der dem blockierten Zustand zugeordnet ist, ii) der zweite Eingang/Ausgang (ES2) zu dem Fluidreservoir (RF) über das zweite Rückschlagmittel (MA2), wodurch nur einen Fluiddurchgang von dem Fluidreservoir (RF) zu dem zweiten Einlass-Auslass (ES2) und über ein zweites Magnetventil (EV2), das parallel zu dem zweiten Rückschlagmittel (MA2) geschaltet ist und in der Lage ist, entweder einen erster offener Zustand der dem ausgerückten Zustand zugeordnet ist, ein zweiter geschlossener Zustand der dem zugeordnet ist blockierten Zustand, und iii) der Zwischeneingang/Ausgang (ESI) zu dem Flüssigkeitsbehälter (RF) und andererseits das erste (EV1) und das zweite (EV2) Magnetventil entweder in den ersten offenen Zustand versetzt, um wobei die Magnetventile Aktionsmittel (MAC) in den ausgerückten Zustand oder in den zweiten geschlossenen Zustand versetzt werden, um die Aktionsmittel (MAC) in den blockierten Zustand zu versetzen.

4. Vorrichtung nach Anspruch 2, **dadurch gekennzeichnet, dass** die Steuerschaltung (CC) einerseits i) den ersten Eingang/Ausgang (ES1) mit dem Flüssigkeitsbehälter (RF) über ein erstes Magnetventil (EV1) mit dem ersten Rückschlagmittel (MA1), die nur einen Flüssigkeitsdurchgang von dem Flüssigkeitsbehälter (RF) zum ersten Einlass-Auslass (ES1) ermöglichen und entweder einen ersten offenen Zustand einnehmen können der dem getrennten Zustand zugeordnet ist, oder einen zweiten definierter Zustand durch das erste Rückschlagmittel (MA1) und dem blockierten Zustand zugeordnet, ii) der zweite Eingang/Ausgang (ES2) zu dem Flüssigkeitsbehälter (RF) über ein zweites Magnetventil (EV2) mit dem zweiten Rückschlag Mittel (MA2), die nur einen Durchgang von Fluid von dem Fluidreservoir (RF) zum zweiten Einlass-Auslass (ES2) ermöglichen und in der Lage sind, entweder einen ersten offenen Zustand der dem ausgerückten Zustand zugeordnet ist, oder einen zweiten Zustand einzunehmen, der definiert ist durch das zweite Rückschlagmittel (MA2) und dem blockierten Zustand zugeordnet ist, und iii) der Zwischeneinlass-Auslass (ESI) zu dem Fluidreservoir (RF) und andererseits das erste (EV1) und das zweite (EV2) Magnetventil entweder in den ersten offenen Zustand versetzt, um die Betätigungsmittel (MAC) in den ausgerückten Zustand oder in den zweiten Zustand, um das Aktionsmittel (MAC) in den blockierten Zustand zu versetzen.

5. Vorrichtung nach Anspruch 2, **dadurch gekennzeichnet, dass** die Steuerschaltung (CC) einerseits i) die ersten (ES1) und zweiten (ES2) Ein-Ausgänge mit dem Flüssigkeitsreservoir (RF) über ein Magnetventil (EV1) koppelt mit mindestens drei Wegen und umfassend die ersten (MA1) und zweiten (MA2) Rückschlagmittel, die nur einen Flüssigkeitsdurchgang von dem Flüssigkeitsbehälter (RF) zu den ersten (ES1) bzw. zweiten (ES2) Einlässen ermöglichen - Ausgänge, und in der Lage sein, entweder einen ersten offenen Zustand der dem getrennten Zustand zugeordnet ist, oder einen zweiten Zustand einzunehmen, der durch die ersten (MA1) und zweiten (MA2) Rückschlagmittel definiert und dem blockierten Zustand zugeordnet ist, und ii) das Zwischen-Eingang/Ausgang (ESI) zu dem Flüssigkeitsbehälter (RF) und setzt andererseits das Magnetventil (EV1) entweder in den ersten offenen Zustand, um die Betätigungseinrichtung (MAC) in den ausgerückten Zustand zu versetzen, oder in den zweiten Zustand, um das Aktionsmittel (MAC) in den blockierten Zustand zu versetzen.

6. Vorrichtung nach Anspruch 2, **dadurch gekennzeichnet, dass** die Steuerschaltung (CC) einerseits die ersten (ES1) und zweiten (ES2) Eingänge/Ausgänge und den Zwischeneingang/Ausgang (ESI) mit dem Vorratsbehälter von koppelt Fluid (RF) über ein Sechs-Wege-Magnetventil (EV1) und i) umfassend die ersten (MA1) und zweiten (MA2) Rückschlagmittel, die nur einen Durchgang von Fluid von dem Fluidreservoir (RF) zum jeweiligen ersten ermöglichen (ES1) und zweite (ES2) Eingänge/Ausgänge, und ii) in der Lage sein, entweder einen ersten offenen Zustand einzunehmen, der dem ausgerückten Zustand zugeordnet ist und in dem das Fluid zwischen dem ersten (P1) und dem zweiten (P2) Teil und dem Fluid zirkuliert Reservoir (RF) zirkuliert, aber nicht zwischen dem zwischengeschalteten Input-Output (ESI) und dem Fluidreservoir (RF) zirkuliert, dh einem zweiten Zustand, der dem blockierten Zustand zugeordnet ist und in dem das Fluid von dem Fluidreservoir (RF) zum ersten zirkuliert (P1) und zweiter (P2) Teil über die die ersten (MA1) und zweiten (MA2) Rückschlagmittel und zirkulieren zwischen dem Zwischeneingangsausgang (ESI) und dem Flüssigkeitsreservoir (RF) und platziert andererseits das Magnetventil (EV1) entweder in der ersten offenen Zustand, um das Aktionsmittel (MAC) in den ausgerückten Zustand zu versetzen, oder in den zweiten Zustand, um das Aktionsmittel (MAC) in den blockierten Zustand zu versetzen.

7. Vorrichtung nach einem der vorhergehenden Ansprüche, **dadurch gekennzeichnet, dass** das Gehäuse (CR) und der Kolben (PI) einen Hubwagen oder einen Spindelhubwagen bilden.

8. Vorrichtung nach Anspruch 7, **dadurch gekennzeichnet, dass** das Spindelhubgetriebe ein Kugelgewindetrieb ist.

9. Kraftfahrzeug mit mindestens einem Zug mit rechten und linken Rädern, **dadurch gekennzeichnet, dass** es ferner mindestens eine Anti-Roll-Vorrichtung (DA) nach einem der vorhergehenden Ansprüche umfasst und mit den rechten und linken Rädern dieses Zuges gekoppelt ist.

## Claims

1. Anti-roll device (DA) for a train of a motor vehicle, said device (DA) comprising a bar (BA) suitable for being coupled to the right and left wheels of said train via two connecting rods (Bj), **characterized in that** it comprises i) action means (MAC) forming part of said bar (BA) and comprising a casing (CR) defining a chamber (CH) subdivided into first (P1) and second (P2) parts of variable volumes by a piston (PI) fixedly secured to a rod (T), and comprising first (ES1) and second (ES2) inputs-outputs communicating respectively with said first (P1) and second (P2) parts and an input-output intermediate (ESI) communicating with said first part (P1) or said second part (P2) according to the position of said piston (PI), and taking a disengaged state or a blocked state in any position of said piston (PI) according to respective current accessibility states of said first (ES1) and second (ES2) inputs-outputs and of said intermediate input-output (ESI), and ii) a hydraulic control circuit (CC) and controlling said accessibility states as a function of commands received and **in that** the bar (BA) comprises a first arm, a first end of which is fixedly secured to the casing (CR), a second arm, a first end of which is secured to the rod (T) of the piston (PI), the rod (T) being able to translate relative to the casing (CR), the second ends of the first and second arm each being connected to a link.

2. Device according to claim 1, **characterized in that** said control circuit (CC) comprises i) first (MA1) and second (MA2) non-return means each coupled to at least one of said first (ES1) and second ( ES2) intermediate inputs-outputs and input-output (ESI), ii) at least one solenoid valve (EVk) coupled to at least one of said first (ES1) and second (ES2) intermediate input-outputs and input-output (ESI) ), and possibly to at least one of the first (MA1) and second (MA2) non-return means, and placed either in a first state imposing said disengaged state, or in a second state imposing said blocked state, and iii) a fluid reservoir (RF) compensating at least the variations in volume induced by movements of said piston (PI).

3. Device according to claim 2, **characterized in that** said control circuit (CC), on the one hand, couples i) said first input-output (ES1) to said fluid reservoir (RF) via said first non-return means (MA1), allowing only a passage of fluid from said fluid reservoir (RF) to said first inlet-outlet (ES1), and via a first solenoid valve (EV1) mounted in parallel with said first non-return means (MA1) and able to take either a first open state associated with said disengaged state, or a second closed state associated with said blocked state, ii) said second input-output (ES2) to said fluid reservoir (RF) via said second non-return means (MA2), allowing only one passage of fluid from said fluid reservoir (RF) to said second inlet-outlet (ES2), and via a second solenoid valve (EV2) connected in parallel with said second non-return means (MA2) and able to take either a first open state associated with said state disengaged, either a second closed state associated with said blocked state, and iii) said intermediate input-output (ESI) to said fluid reservoir (RF), and, on the other hand, places said first (EV1) and second (EV2) solenoid valves in either said first open state to place said said solenoid valves action means (MAC) in said disengaged state, or in said second closed state to place said action means (MAC) in said blocked state.

4. Device according to claim 2, **characterized in that** said control circuit (CC), on the one hand, couples i) said first input-output (ES1) to said fluid reservoir (RF) via a first solenoid valve (EV1) comprising said first non-return means (MA1), allowing only a passage of fluid from said fluid reservoir (RF) to said first inlet-outlet (ES1), and being able to take either a first open state associated with said disconnected state, or a second defined state by said first non-return means (MA1) and associated with said blocked state, ii) said second input-output (ES2) to said fluid reservoir (RF) via a second solenoid valve (EV2) comprising said second non-return means (MA2) , allowing only a passage of fluid from said fluid reservoir (RF) to said second inlet-outlet (ES2), and being able to take either a first open state associated with said disengaged state, or a second state defined by said second non-return means (MA2) and associated with said blocked state, and iii) said intermediate inlet-outlet (ESI) to said fluid reservoir (RF), and, on the other hand, places said first (EV1) and second (EV2) solenoid valves in either said first open state to place said actuating means (MAC) in said disengaged state, or in said second state to place said means of action (MAC) in said blocked state.

5. Device according to claim 2, **characterized in that** said control circuit (CC), on the one hand, couples i) said first (ES1) and second (ES2) inputs-outputs to said fluid reservoir (RF) via a solenoid valve ( EV1) with at least three ways and comprising said first (MA1) and second (MA2) non-return means, allowing only a passage of fluid from said fluid reservoir (RF) to respectively said first (ES1) and second (ES2) inlets - outputs, and being able to take either a first open state associated with said disconnected state, or a second state defined by said first (MA1) and second (MA2) non-return means and associated with said blocked state, and ii) said intermediate input-output (ESI) to said fluid reservoir (RF), and, on the other hand, places said solenoid valve (EV1) either in said first open state to place said actuating means (MAC) in said disengaged state, or in said second state to place said means of action (MAC) in said blocked state.

6. Device according to claim 2, **characterized in that** said control circuit (CC), on the one hand, couples said first (ES1) and second (ES2) inputs-outputs and said intermediate input-output (ESI) to said fluid reservoir (RF) via a six-way solenoid valve (EV1) and i) comprising said first (MA1) and second (MA2) non-return means, allowing only a passage of fluid from said fluid reservoir (RF) to said first (ES1) respectively ) and second (ES2) inputs-outputs, and ii) being able to take either a first open state associated with said disengaged state and in which said fluid circulates between said first (P1) and second (P2) parts and said fluid reservoir (RF) but does not circulate between said intermediate input-output (ESI) and said fluid reservoir (RF), a second state associated with said blocked state and in which said fluid circulates from said fluid reservoir (RF) to said first (P1) and second (P2) parts via respectively lesdi ts first (MA1) and second (MA2) non-return means and circulates between said intermediate input-output (ESI) and said fluid reservoir (RF), and, on the other hand, places said solenoid valve (EV1) either in said first open state to place said action means (MAC) in said disengaged state, or in said second state to place said action means (MAC) in said blocked state.

7. Device according to one of the preceding claims, **characterized in that** said casing (CR) and piston (PI) define a pallet jack or a screw jack.

8. Device according to claim 7, **characterized in that** the screw jack is a ball screw jack.

9. Motor vehicle comprising at least one train comprising right and left wheels, **characterized in that** it further comprises at least one anti-roll device (DA) according to one of the preceding claims, and coupled to said right and left wheels of this train.
